# EUROPEAN PATENT APPLICATION

(11) **EP 4 312 122 A1**
(43) Date of publication of application: **31.01.2024**
(21) Application number: 23155772.9
(22) Date of filing: 09.02.2023
(51) Int. Cl.: G06F 9/50

(54) **RESOURCE ALLOCATION METHOD AND APPARATUS, DEVICE, AND STORAGE MEDIUM**

(30) Priority: 26.07.2022 CN 202210895260
(71) Applicant: BEIJING BAIDU NETCOM SCIENCE TECHNOLOGY CO., LTD., Beijing (CN)
(72) Inventor: FAN, Yeda, Beijing (CN)
(74) Representative: Hannke Bittner & Partner mbB Regensburg

(57) **Abstract**

The present disclosure provides a resource allocation method and apparatus, a device and a storage medium, relating to the field of computer technology, and in particular to fields of resource management, task allocation and the like in computer technology. The resource allocation method includes: creating (S101) a pod for a target task; acquiring (S102) Graphics Processing Unit (GPU) resource requirement information of the target task; acquiring (S103) available node information of a target cluster and available GPU resource information of the target cluster; and allocating (S104), based on the available node information and the available GPU resource information, first and second target nodes satisfying the GPU resource requirement information to the pod, where the first target node is a node where a target GPU resource allocated to the pod is located, and the second target node is a node where the pod allocated to the pod is located.

## Description

### TECHNICAL FIELD

The present disclosure relates to the field of computer technology, especially, to fields of resource management, task allocation and the like in computer technology, and in particular, to a resource allocation method and apparatus, a device and a storage medium.

### BACKGROUND

In a machine learning scenario, computing resources often need to be managed uniformly. When some clusters (such as Kubernetes cluster, K8S cluster for short) execute a task, resources will be allocated for a pod corresponding to the task, and specifically, a node, a graphics processing unit (GPU) and other resources will be allocated to the pod. In the related art, only the node with a GPU resource may be allocated to the pod during allocation. However, this allocation method has a low resource utilization rates.

### SUMMARY

The present disclosure provides a resource allocation method and apparatus, a device and a storage medium.

According to a first aspect of the present disclosure, provided is a resource allocation method, including: creating a pod for a target task; acquiring GPU resource requirement information of the target task; acquiring available node information of a target cluster and available GPU resource information of the target cluster; and allocating, based on the available node information and the available GPU resource information, first and second target nodes satisfying the GPU resource requirement information to the pod, where the first target node is a node where a target GPU resource allocated to the pod is located, and the second target node is a node where the pod allocated to the pod is located.

According to a second aspect of the present disclosure, provided is a resource allocation apparatus, including: a creation module configured to create a pod for a target task; a first acquisition module configured to acquire GPU resource requirement information of the target task; a second acquisition module configured to acquire available node information of a target cluster and available GPU resource information of the target cluster; and an allocation module configured to allocate, based on the available node information and the available GPU resource information, first and second target nodes satisfying the GPU resource requirement information to the pod, where the first target node is a node where a target GPU resource allocated to the pod is located, and the second target node is a node where the pod allocated to the pod is located.

According to a third aspect of the present disclosure, provided is an electronic device, including: at least one processor; and a memory connected in communication with the at least one processor; where the memory stores an instruction executable by the at least one processor, and the instruction, when executed by the at least one processor, enables the at least one processor to execute the method provided in the first aspect as set forth above.

According to a fourth aspect of the present disclosure, provided is a non-transitory computer-readable storage medium storing a computer instruction thereon, and the computer instruction is used to cause a computer to execute the method provided in the first aspect as set forth above.

According to a fifth aspect of the present disclosure, provided is a computer program product including a computer program, and the computer program implements the method provided in the first aspect as set forth above, when executed by a processor.

The technical solutions of the embodiments of the present disclosure can improve the resource utilization rate.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure.
FIG. 1 is a schematic flowchart of a resource allocation method according to embodiments of the present disclosure.
FIG. 2 is a schematic diagram of a relationship between nodes in a computer room according to embodiments of the present disclosure.
FIG. 3 is an overall flowchart of a resource allocation method according to embodiments of the present disclosure.
FIG. 4 is a first block diagram of a resource allocation apparatus according to embodiments of the present disclosure.
FIG. 5 is a second block diagram of a resource allocation apparatus according to embodiments of the present disclosure.
FIG. 6 is a schematic diagram of a resource allocation scenario according to embodiments of the present disclosure.
FIG. 7 is a block diagram of an electronic device for implementing the resource allocation method according to embodiments of the present disclosure.

### DETAILED DESCRIPTION

Hereinafter, description of exemplary embodiments of the present disclosure will be made with reference to the accompanying drawings, which includes various details of the embodiments of the present disclosure to facilitate understanding and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

The terms "first", "second", and "third", etc., in the embodiments of the present disclosure in the descriptions and claims and the above-described drawings are intended to distinguish similar elements and not necessarily to describe a particular sequential or chronological order. Furthermore, the terms "comprises/includes" and "comprising/including", as well as any variations thereof, are intended to cover a non-exclusive inclusion, for example, a series of steps or elements is included. The methods, systems, articles, or devices are not necessarily limited to the explicitly listed steps or elements, but may include other steps or elements not expressly listed or inherent to such processes, methods, articles, or devices.

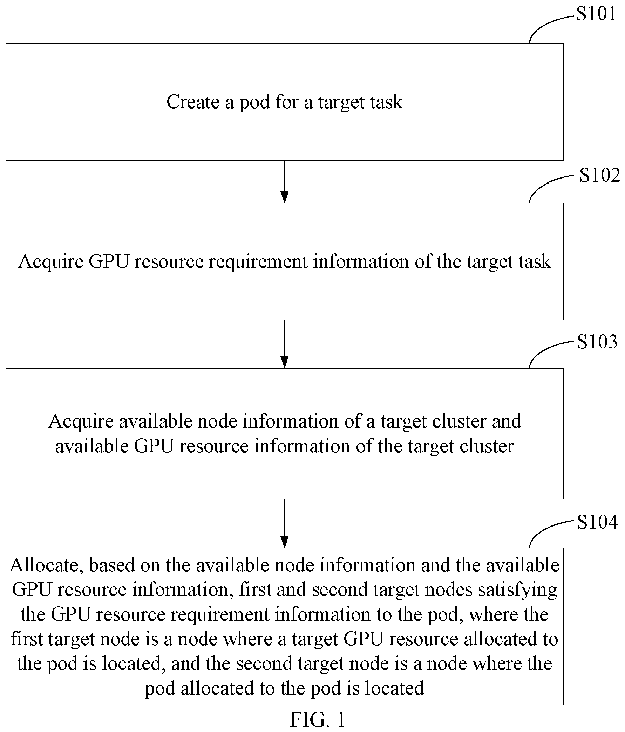

The embodiments of the present disclosure provide a resource allocation method. FIG. 1 is a schematic flowchart of the resource allocation method according to the embodiments of the present disclosure, and the resource allocation method may be applied to a resource allocation apparatus. The resource allocation apparatus is located in an electronic device, and the electronic device includes, but is not limited to, a fixed device and/or a mobile device. The electronic device has a function of resource scheduling. For example, the electronic device may be deployed on a target cluster, or independent of the target cluster but may be connected to the target cluster. In some possible implementations, the resource allocation method may also be implemented by the processor invoking a computer-readable instruction stored in the memory. As shown in FIG. 1, the resource allocation method includes the followings.

In S101, a pod is created for a target task.

In S102, GPU resource requirement information of the target task is acquired.

In S103, available node information of a target cluster and available GPU resource information of the target cluster are acquired.

In S 104, first and second target nodes satisfying the GPU resource requirement information are allocated to the pod based on the available node information and the available GPU resource information, where the first target node is a node where a target GPU resource allocated to the pod is located, and the second target node is a node where the pod allocated to the pod is located.

Here, the target cluster may be a private cloud delivery cluster, such as a cluster constructed based on Kubernetes (K8S for short), a cluster built based on an open source distributed resource management framework (e.g., open source distributed resource management framework mesos) and an application testing tool (e.g., application testing tool marathon), and the like. The above is merely an exemplary illustration, and is not intended to be a limitation on all possible types of target clusters which are not exhaustive herein.

In an example, the K8S is a container-oriented container cluster management platform developed based on a cluster manager. The K8S uniformly manages the underlying host, network and storage resources based on container technologies, etc., providing application deployment, maintenance, expansion mechanism and other functions. The K8S may be utilized to conveniently manage containerized applications running across machines.

In the embodiments of the present disclosure, the target cluster includes a plurality of nodes, and different nodes have different identifiers. The node may be a bare machine, a physical machine, a virtual machine, and the like.

In the embodiments of the present disclosure, the target task is a task that needs to be executed by the target cluster. For example, the target task may be a detection task. For another example, the target task may be a classification task. For another example, the target task may be a segmentation task. The above is merely an exemplary illustration, and is not intended to be a limitation on all possible types of target tasks which are not exhaustive herein.

In the embodiments of the present disclosure, the target task is a task that needs to use a GPU resource. The target task runs in the pod.

In the embodiments of the present disclosure, the target task may be a task created by a user through a user interface of the target cluster. The target task may also be a target task created by other devices forwarded by a terminal. The present disclosure does not limit source modes of the target task.

In the embodiments of the present disclosure, a specific implementation mode of creating the pod for the target task is not limited.

In the embodiments of the present disclosure, the GPU resource requirement information includes relevant information of the GPU resource requested by the target task requests to use. The GPU resource requirement information includes at least GPU resource usage. The GPU resource requirement information may also include GPU resource usage conditions that are requested for use, such as a type of a GPU card to which the GPU resource pertains and a topology relationship of the GPU card to which the GPU resource pertains.

Here, the type of GPU cards includes but is not limited to a Nvidia GPU card and a BitContinental GPU card.

Here, the topological relationship of the GPU card refers to a relationship between GPU cards, and the relationship includes but is not limited to a communication relationship and a priority relationship (invoked order). Exemplarily, the communication relationship includes: a communication mode between a certain GPU and other GPUs. Exemplarily, the topology relationship includes: the previous GPU and the next GPU of a certain GPU.

When two or more GPUs have a topological relationship, the GPU card to be invoked may be selected based on the topological relationship. For example, node 1 has P GPU cards, and there is a topological relationship between Q GPU cards among the P GPU cards. If a sum of GPU resource quantities of R GPU cards among the Q GPU cards may satisfy the GPU resource usage requested by the target task, the node 1 may be used as one of candidate nodes.

In some implementations, acquiring the available node information of the target cluster and the available GPU resource information of the target cluster, includes: determining, according to reported information of a GPU resource pool and dynamic information of the target cluster, the available node information of the target cluster and the available GPU resource information of the target cluster.

Here, the available node information may be understood as a node in an idle state.

Here, the available GPU resource information may be understood as information of the GPU resource in the idle state.

In the embodiments of the present disclosure, the first target node and the second target node are two nodes of current available nodes in the target cluster.

In the embodiments of the present disclosure, the execution order of S 102 and S 103 is not limited. S102 and S 103 may be executed simultaneously; or, S 102 may be executed prior to S103; or, S 102 may be executed after S103.

According to the technical solutions of the embodiments of the present disclosure, the pod created for the target task is received; the GPU resource requirement information of the target task is acquired; the available node information of the target cluster and the available GPU resource information of the target cluster are acquired; first and second target nodes satisfying the GPU resource requirement information are allocated to the pod based on the available node information and the available GPU resource information; and the first target node is the node where the target GPU resource allocated to the pod is located, and the second target node is the node where the pod allocated to the pod is located. In this way, compared with the allocation mode of only allocating a single node with the GPU resource to the pod, the present disclosure adopts the allocation mode of allocating two nodes to the pod. One is the first target node where the target GPU resource allocated to the pod is located, and the other is the second target node where the pod allocated to the pod is located. The second target node may not have GPU resource, thereby enabling the second target node to execute the target task corresponding to the pod based on the GPU resource of the first target node. By adopting the allocation mode of allocating different nodes to the pod and the GPU resource, the decoupling between the node where the GPU resource is located and the node where the pod is located is realized, the limitation of only allocating the node with GPU resource to the pod is eliminated, and the resource utilization rate is improved.

In some implementations, the GPU resource requirement information includes GPU resource usage, a type of a GPU card, and a topology structure of the GPU card. Allocating, based on the available node information and the available GPU resource information, first and second target nodes satisfying the GPU resource requirement information to the pod, includes: determining, based on the available node information and the available GPU resource information, a plurality of candidate nodes satisfying the GPU resource usage for the pod; determining, from the plurality of candidate nodes, a first node set satisfying the type of the GPU card and the topology structure of the GPU card; and determining, based on the first node set, the first target node and the second target node.

Here, the GPU resource usage includes a GPU resource video card quantity and/or a computing power quantity that are requested to be used.

For example, the target cluster includes N nodes. M of the N nodes have at least one GPU card, where both M and N are positive integers, M is less than or equal to N, and N is a positive integer greater than or equal to 2. It is assumed that the current available nodes of the target cluster have a total of k nodes, including n1, n2, ..., and nk. If the available nodes n1, n2, n3, n4, n5, and ni may satisfy the GPU resource usage requested by the target task, n1, n2, n3, n4, n5, and ni are determined as candidate nodes. If n1, n2, n3, n4, and n5 satisfy the type of the GPU card and the topology structure of the GPU card requested by the target task, n1, n2, n3, n4, and n5 are determined as the first node set. Both k and i are positive integers.

In this way, by first determining the first node set satisfying the GPU resource usage for the pod and then determining the first target node and the second target node based on the first node set, the selection speed of the first target node and the second target node can be increased, and the selection accuracy of the first target node and the second target node can be improved.

In some implementations, determining, based on the first node set, the first target node and the second target node, includes: determining an idle quantity of GPU resource corresponding to each GPU of each node in the first node set; selecting, from the first node set, a node where the idle quantity of GPU resource satisfies the GPU resource usage as a second node set; and determining, based on the second node set, the first target node and the second target node.

Here, the idle quantity of GPU resource may include an idle quantity of video memory and an idle quantity of computing power.

Here, the second node set includes the node where the target GPU resource allocated to the pod is located.

For example, if nodes n1, n2, n3, n4, and n5 are determined as the first node set, and GPU resources of n1, n2, n3, and n4 in the first node set may satisfy the video memory and the computing power requested by the target task, the nodes n1, n2, n3, and n4 are determined as the second node set.

In this way, firstly, the second node set is selected from the first node set, and then the first target node and the second target node are determined based on the second node set, thereby improving the filtering accuracy of the first target node and the second target node.

In some implementations, determining, based on the second node set, the first target node and the second target node, includes: acquiring information of a switch corresponding to each node in the second node set; determining, based on the information of the switch corresponding to each node in the second node set, third and fourth node sets corresponding to each node in the second node set; and determining, from the second node set, the third node set and the fourth node set, the first target node and the second target node.

Here, the information of the switch may include at least one of: an identifier of the switch, network information of the switch, and network information of the target cluster.

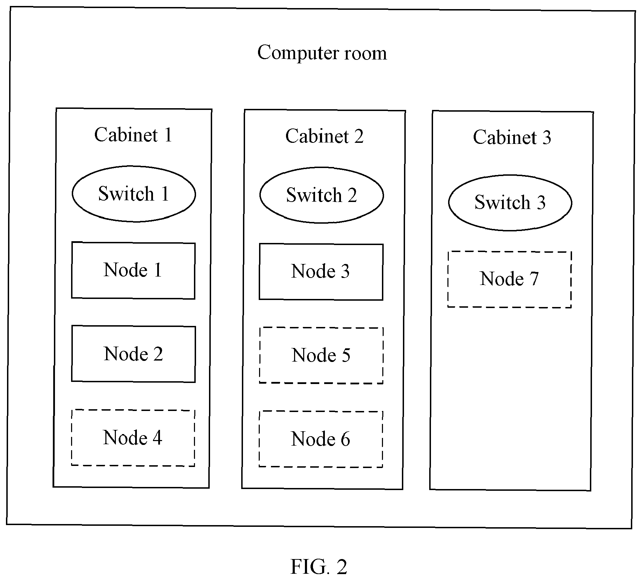

FIG. 2 shows a schematic diagram of a relationship between nodes in a computer room. As shown in FIG. 2, there are a plurality of cabinets in the computer room. The cabinets communicate with each other through a switch. One cabinet corresponds to one switch, and one cabinet includes one or more nodes. Nodes under each cabinet communicate with each other through the same switch, and nodes under different cabinets communicate with each other by forwarding relevant information through a switch. Each node may or may not have a GPU card. In FIG. 2, nodes represented by solid lines have GPU cards, while nodes represented by dotted lines do not have GPU cards.

In this way, firstly, the third node set and the fourth node set are selected based on the second node set, and then the first target node and the second target node are determined from the second node set, the third node set and the fourth node set, which can extend the selectable range of the first target node and the second target node, thereby helping to improve the resource utilization rate.

In some implementations, determining, based on the information of the switch corresponding to each node in the second node set, the third and fourth node sets corresponding to each node in the second node set, includes: determining, for any node in the second node set, a node corresponding to the same switch as the node as the third node set corresponding to the node; and determining, for any node in the second node set, a node corresponding to a different switch from the node as the fourth node set corresponding to the node.

In practical applications, the third node set and the fourth node set may be determined simultaneously for the second node set. Or, the third node set is determined firstly, and then the fourth node set is determined. Or, the fourth node set is determined firstly, and then the third node set is determined.

In this way, the third node set and the fourth node set may be determined for the second node set according to the information of the switch corresponding to each node in the second node set, and the selectable range of the first target node and the second target node can be extended, thereby helping to increase the speed of allocating the node and the GPU resource to the pod.

In some implementations, determining, from the second node set, the third node set and the fourth node set, the first target node and the second target node, includes: acquiring load situations respectively corresponding to the second node set, the third node set and the fourth node set; and determining, according to the load situations respectively corresponding to the second node set, the third node set and the fourth node set, the first target node and the second target node.

Here, the load situation may include usage quantities of various loads. The load includes but is not limited to a CPU, a magnetic disk, a memory, and the like. For example, the usage of the CPU may be represented by a usage rate of the CPU. The usage of the magnetic disk may be represented by an occupancy quantity of the magnetic disk. The usage of the memory may be represented by a size of the used memory.

In this way, while extending the selectable range of the first target node and the second target node, the first target node and the second target node may be determined according to the load situations respectively corresponding to the second node set, the third node set and the fourth node set, and the availability of the first target node and the second target node allocated can be ensured.

In some implementations, determining, according to the load situations respectively corresponding to the second node set, the third node set and the fourth node set, the first target node and the second target node, includes: determining various attributes of each node and weight values corresponding to the various attribute in the second node set, the third node set and the fourth node set; determining, based on the weight values corresponding to the various attributes of each node, a total weight value of each node; determining, according to the total weight value of each node, a maximum total weight value; and determining, according to the maximum total weight value, the first target node where the GPU resource is located and the second target node where the pod is located.

In the embodiments of the present disclosure, the attribute corresponding to each node may include at least one of: a set (located in the second node set, the third node set, or the fourth node set), network throughput of a corresponding switch, network usage of the corresponding switch, an idle quantity of GPU video memory, an idle quantity of GPU computing power, an idle quantity of magnetic disk, an idle quantity of central processing unit (CPU), and a GPU dynamic priority.

Here, a weight value may be set for each attribute in advance.

In an example, in the case where the node is located in the second node set, the third node set and the fourth node set, the weight values are set in an order from high to low.

In an example, for the network throughput and usage of the switch, the idle quantity of GPU video memory, the idle quantity of GPU computing power, the idle quantity of magnetic disk, and the idle quantity of CPU, the greater the idle quantity, the higher the weight value.

In an example, the higher the GPU priority, the higher the weight value.

For example, in the case where the node is located in the second batch, the third batch and the fourth batch, the consideration of determining the weight value is that: the target GPU resource used by the pod is located in node 1, 2 or 3; and the pod is located in node 1, 2, 3 ... or 7. When the GPU is located in node 1 and the pod is also located in node 1 (the second node set), the weight has the largest value, for example, a weight value of 100, because the GPU and the pod are located in the same node at this time; when the GPU is located in node 1 and the pod is located in node 2 or 4 (the third node set), the weight has a slightly lower value, for example, a weight value of 30, because the GPU and the pod share the same switch at this time; and when the GPU is located in node 1 and the pod is located in node 3, 5, 6 or 7 (the fourth node set), the weight has the smallest value, for example, a weight value of 10, because the GPU and the pod do not share the same switch at this time. Reference may be made to the above in the case where the GPU is located in other nodes. The relationship between the second node set, the third node set, and the fourth node set and the weights is shown in Table 1.

**Table 1**

| Node | 1 | 2 | 3 | 4 | 5 | 6 | 7 |
|---|---|---|---|---|---|---|---|
| 1 | 100 | 30 | 10 | 30 | 10 | 10 | 10 |
| 2 | 30 | 100 | 10 | 30 | 10 | 10 | 10 |
| 3 | 10 | 10 | 100 | 10 | 30 | 30 | 10 |

In Table 1, the leftmost number represents the node where the GPU is located, and the topmost number represents the node where the pod is located.

When calculating the weight values, reference is made to the following steps.

For the case where the GPU is located in node 1, the weight values in the case where the pod is located in nodes 1 to 7 are determined, i.e., weight values corresponding to the individual attributes are added together to obtain a summed-up weight.

For the case where the GPU is located in node 2, the weight values in the case where the pod is located in nodes 1 to 7 are determined, i.e., weight values corresponding to the individual attributes are added together to obtain a summed-up weight.

For the case where the GPU is located in node 3, the weight values in the case where the pod is located in nodes 1 to 7 are determined, i.e., weight values corresponding to the individual attributes are added together to obtain a summed-up weight.

Based on the above steps, a total of 21 summed-up weights are obtained. Firstly, a maximum summed-up weight value is determined from the 21 summed-up weights, and then the nodes where the GPU and the pod are located, respectively, are determined based on the maximum summed-up weight value, which is the optimal solution.

Scheduling is performed according to this result. For example, if the summed-up weight value is the largest when the GPU is located in node 2 and the pod is located in node 1, node 1 is allocated to the pod and GPU service address of node 2 is allocated to the pod, so that the pod may use GPU resource based on the service address.

In this way, when the pod and the target GPU resource are located on different nodes, the GPU resource can be scheduled, which solves the problem that the node cannot be scheduled for the pod in the case where the GPU resources are insufficient. Moreover, the usage efficiency of the GPU resource can be improved, and the resource dynamic scheduling can be realized.

In some implementations, various attributes of each node, include at least one of: a set to which the node pertains, where different sets correspond to different weight values; network throughput of a switch corresponding to the node; usage of the switch corresponding to the node; an idle quantity of video memory of a GPU corresponding to the node; an idle quantity of computing power of the GPU corresponding to the node; an idle quantity of magnetic disk corresponding to the node; an idle quantity of CPU corresponding to the node; or a GPU priority corresponding to the node.

Here, the different sets correspond to the different weight values. The weight value of the node of the second node set is greater than the weight value of the node of the third node set, and the weight value of the node of the third node set is greater than the weight value of the node of the fourth node set.

Here, the greater the network throughput of the switch, the greater the weight value.

Here, the greater the usage of the switch, the smaller the weight value.

Here, for various idle quantities, the greater the idle quantity, the greater the weight value.

Here, the GPU priority refers to a priority at which the GPU is scheduled. Here, the higher the GPU priority, the greater the weight value.

In this way, by assigning different weight values to different attributes, the determination standardization of the first target node and the second target node is realized, and the determination speed of the first target node and the second target node is increased.

In some implementations, the resource allocation method may also include: notifying the second target node to utilize the target GPU resource of the first target node to execute the target task.

The embodiments of the present disclosure do not limit the notification mode.

Here, notifying the second target node to utilize the target GPU resource of the first target node to execute the target task, includes: notifying a service address of the target GPU resource in the first target node to the second target node, so that the second target node invokes the target GPU resource of the first target node based on the service address of the target GPU resource, to execute the target task based on the target GPU resource.

In this way, when the pod and the GPU are located on different nodes, the GPU resource can be scheduled, which solves the problem that the node cannot be scheduled for the pod in the case where the GPU resources are insufficient. Moreover, the usage efficiency of the GPU resource can be improved, and the dynamic scheduling can be realized.

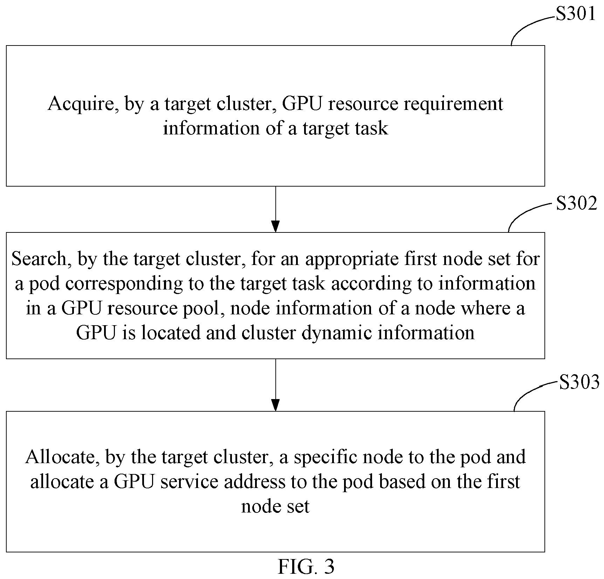

FIG. 3 shows a schematic flowchart of resource allocation. As shown in FIG. 3, the flow includes the followings.

In S301, a target cluster acquires GPU resource requirement information of a target task.

Here, the GPU resource requirement information includes: a usage requirement (video memory requirement and computing power requirement), a usage condition, a GPU allocation mode, and a GPU priority.

Here, the use condition contains a type of a GPU card, a topology relationship of the GPU card, and the like. The type of GPU card includes but is not limited to a Nvidia GPU card and a BitContinental GPU card.

Here, the GPU allocation is classified into two modes, in which: mode a, a pod and a GPU are located on the same node; and mode b, the pod and the GPU are located on different nodes.

Here, the GPU priority is a priority to be set, and the priority may be set to a value of 0 to 9. The higher the priority, the higher the order to be scheduled.

Here, the target task may be a task created by a user that needs to use a GPU resource. A pod is generated for the task, and the task may run in the pod.

In S302, the target cluster searches for an appropriate first node set for a pod corresponding to the target task according to information in a GPU resource pool, information of a node where a GPU is located and cluster dynamic information.

In S303, the target cluster allocates a specific node and allocates a GPU service address to the pod based on the first node set.

Here, allocating the specific node and allocating the GPU service address to the pod, includes: determining the node where the pod is located and the node where the GPU is located.

For the above mode a, the pod and the GPU are located on the same node, and the allocation step includes the followings.

The usage requirement (video memory and computing power requirement) of the GPU and the usage information of the GPU in the GPU resource pool are compared, to find a node that satisfies conditions, i.e., a node that has more idle video memory and computing power than requirement and that satisfies the usage conditions such as the type of the GPU card and node name is selected.

For the above mode b, the pod and the GPU are located on different nodes, and the allocation steps include the followings.

In step b1, the usage requirement of the GPU and the usage information of the GPU in the GPU resource pool are compared, to find the node that satisfies the conditions. The idle video memory and computing power are determined based on the reported information and the cluster dynamic information, the idle video memory and computing power are compared with the GPU usage requirement, and the corresponding node is selected if the conditions are satisfied. Then, the first node set is selected based on the type of the GPU card and the topology relationship of the GPU card in the usage conditions.

In step b2, the idle video memory and computing power of each GPU in each node are determined by continuing to filter in the first node set. As long as the amount of the idle memory and computing power of the GPU satisfies the GPU resource usage requirement, the node will be retained, and otherwise the node will be discarded to determine the second node set. The service address of the GPU is determined according to the second node set.

In step b3, for each node in the second node set, a switch to which the node is connected is determined, and then third and fourth node sets corresponding to the node are determined based on the switch (the network information of the node in the node information, the network information of the switch and the network information of the K8S cluster are comprehensively considered at the same time). The details thereof are as follows.

Referring to FIG. 2, in terms of hardware, there are three cabinets in the computer room. Cabinet 1 has three nodes which are nodes 1, 2, and 4; cabinet 2 has three nodes which are nodes 3, 5, and 6; and the third cabinet has one node 7.

For example, the selected second node set includes node 1, node 2, and node 3. For each second node set, different nodes under the same switch are included in the third node set, and the nodes under different switches are included in the fourth node set.

For node 1, the third node set includes nodes 2 and 4, and the fourth node set includes nodes 3, 5, 6 and 7.

For node 2, the third node set includes nodes 1 and 4, and the fourth node set includes nodes 3, 5, 6 and 7.

For node 3, the third node set includes nodes 5 and 6, and the fourth node set includes nodes 1, 2, 4 and 7.

In step b4, load (CPU, magnetic disk, network) usage situations of individual nodes are judged according to the second node set, the third node set, the fourth node set and the cluster dynamic information to select an optimal node, and an optimal solution node in relation to the node where the GPU is located and the node where the pod is located is determined to pre-allocate the GPU service address to the pod.

In practical applications, the GPU resource pool may report the GPU resource information and the node information of the node where the GPU is located through a K8S plug-in or an independent program.

In an example, the GPU resource information includes: a GPU model and a corresponding number thereof at each node, the video memory and computing power of each GPU, and the topology relationship between GPUs.

In an example, the node information of the node where the GPU is located, includes: a CPU, a memory and a magnetic disk of the node, network information of the node (the quantity of network cards and throughput of network cards), network information of the switch where the node is located (throughput of the switch and networking information of the switch), and network information of the K8S cluster where the node is located.

In practical applications, the cluster dynamic information of the target cluster may be collected through a separate K8S plug-in or an independent program.

In an example, the cluster dynamic information includes an allocation situation of each GPU in the node (allocated GPUs and unallocated GPUs), a usage situation of GPUs (the allocated GPUs may not be used), a usage situation of resources (CPU, magnetic disk, and network) on the node, and a network situation of K8S (used bandwidth and remaining bandwidth).

In this way, by classifying the nodes based on the relative position relationship (the second node set, the third node set, and the fourth node set), the corresponding weight values are determined and summed up with the weights corresponding to other attributes to find the optimal node, so that the pod and the GPU can be located on different nodes. Furthermore, the over-issuance of the GPU resource can be realized. In other words, if the GPU changes from busy to idle, the GPU may be used by the pod of this node or other nodes, which improves the usage efficiency of the GPU resource and realizes the dynamic scheduling.

It should be understood that the schematic diagrams shown in FIGS. 2 and 3 are only exemplary and not restrictive. Various obvious changes and/or substitutions may be made by those skilled in the art based on the examples of FIGS. 2 and 3, and the resulting technical solutions still fall within the scope of the embodiments of the present disclosure.

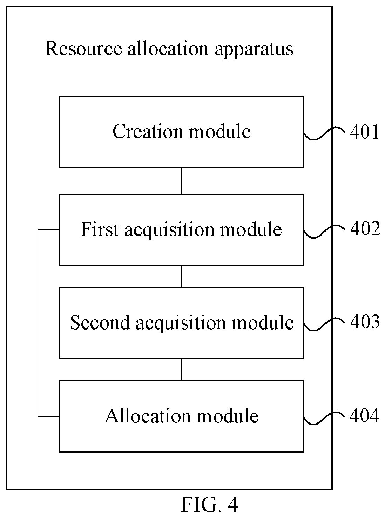

The embodiments of the present disclosure provide a resource allocation apparatus. As shown in FIG. 4, the resource allocation apparatus includes: a creation module 401 configured to create a pod for a target task; a first acquisition module 402 configured to acquire GPU resource requirement information of the target task; a second acquisition module 403 configured to acquire available node information of a target cluster and available GPU resource information of the target cluster; and an allocation module 404 configured to allocate, based on the available node information and the available GPU resource information, first and second target nodes satisfying the GPU resource requirement information to the pod, where the first target node is a node where a target GPU resource allocated to the pod is located, and the second target node is a node where the pod allocated to the pod is located.

In some implementations, the GPU resource requirement information includes GPU resource usage, a type of a GPU card, and a topology structure of the GPU card, and the allocation module 404 includes: a first determination sub-module configured to determine, based on the available node information and the available GPU resource information, a plurality of candidate nodes satisfying the GPU resource usage for the pod; a second determination sub-module configured to determine, from the plurality of candidate nodes, a first node set satisfying the type of the GPU card and the topology structure of the GPU card; and a third determination sub-module configured to determine, based on the first node set, the first target node and the second target node.

In some implementations, the third determination sub-module is configured to determine an idle quantity of GPU resource corresponding to each GPU of each node in the first node set; select, from the first node set, a node where the idle quantity of GPU resource satisfies the GPU resource usage as a second node set; and determine, based on the second node set, the first target node and the second target node.

In some implementations, the third determination sub-module is configured to acquire information of a switch corresponding to each node in the second node set; determine, based on the information of the switch corresponding to each node in the second node set, third and fourth node sets corresponding to each node in the second node set; and determine, from the second node set, the third node set and the fourth node set, the first target node and the second target node.

In some implementations, the third determination sub-module is configured to determine, for any node in the second node set, a node corresponding to the same switch as the node as the third node set corresponding to the node; and determine, for any node in the second node set, a node corresponding to a different switch from the node as the fourth node set corresponding to the node.

In some implementations, the third determination sub-module is configured to acquire load situations respectively corresponding to the second node set, the third node set and the fourth node set; and determine, according to the load situations respectively corresponding to the second node set, the third node set and the fourth node set, the first target node and the second target node.

In some implementations, the third determination sub-module is configured to determine an attribute of each node in the second node set, the third node set and the fourth node set and a weight value corresponding to the attribute; determine, based on the attribute of each node and the weight value corresponding to the attribute, a total weight value of each node; determine, according to the total weight value of each node, a maximum total weight value; and determine, according to the maximum total weight value, the first target node and the second target node.

In some implementations, the attribute of each node includes at least one of: a set to which the node pertains; network throughput of a switch corresponding to the node; usage of the switch corresponding to the node; an idle quantity of video memory of a GPU card corresponding to the node; an idle quantity of computing power of the GPU card corresponding to the node; an idle quantity of magnetic disk corresponding to the node; an idle quantity of CPU corresponding to the node; or a GPU priority corresponding to the node.

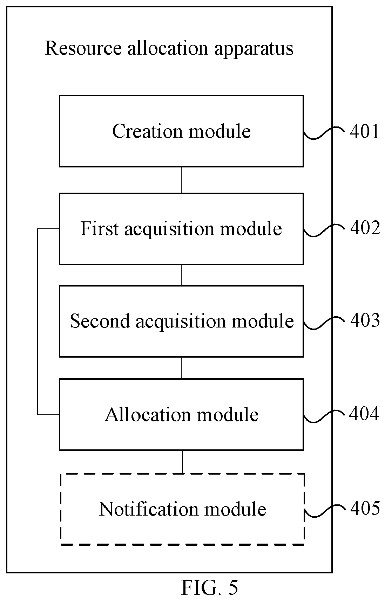

In some implementations, as shown in FIG. 5, the resource allocation apparatus may also include: a notification module 405 configured to send a service address of the target GPU resource in the first target node to the second target node, to enable the second target node to invoke the target GPU resource based on the service address to execute the target task.

It should be understood by those skilled in the art that functions of the processing modules in the resource allocation apparatus according to the embodiments of the present disclosure may be appreciated with reference to the related description of the resource allocation method as set forth above. The processing modules in the resource allocation apparatus according to the embodiments of the present disclosure may be implemented by analog circuits that implement the functions described in the embodiments of the present disclosure, or by running software that implements the functions described in the embodiments of the present disclosure on an electronic device.

The resource allocation apparatus of the present embodiments can improve the resource utilization rate of the target cluster.

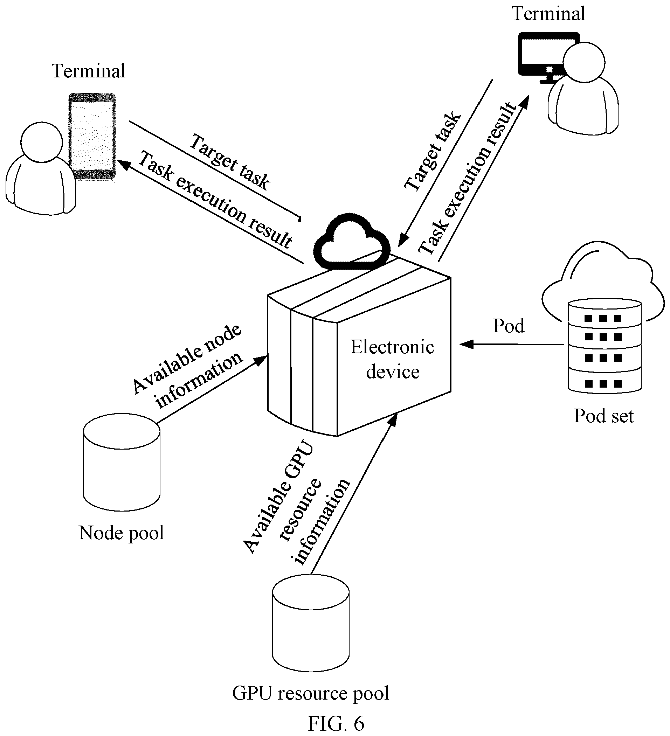

FIG. 6 shows a scenario diagram of resource allocation. It could be seen from FIG. 6, that an electronic device, such as a cloud server, receives a target task sent from each terminal, the target task including GPU resource requirement information; the electronic device creates a pod for the target task; and the GPU resource requirement information of the target task, available node information of a target cluster and available GPU resource information of the target cluster are acquired, and a first target node where a target GPU resource is located and a second target node where the pod is located are allocated to the pod.

The quantity of the terminals and the electronic devices is not limited in the present disclosure. In practical applications, there may be a plurality of terminals and a plurality of electronic devices.

It should be understood that the scenario diagram shown in FIG. 6 is only exemplary and not restrictive. Various obvious changes and/or substitutions may be made by those skilled in the art based on the example of FIG. 6, and the resulting technical solutions still fall within the scope of the embodiments of the present disclosure.

In the technical solution of the present disclosure, the acquisition, storage and application of the user's personal information involved are all in compliance with the provisions of relevant laws and regulations, and do not violate public order and good customs.

According to the embodiments of the present disclosure, the present disclosure also provides an electronic device, a readable storage medium and a computer program product.

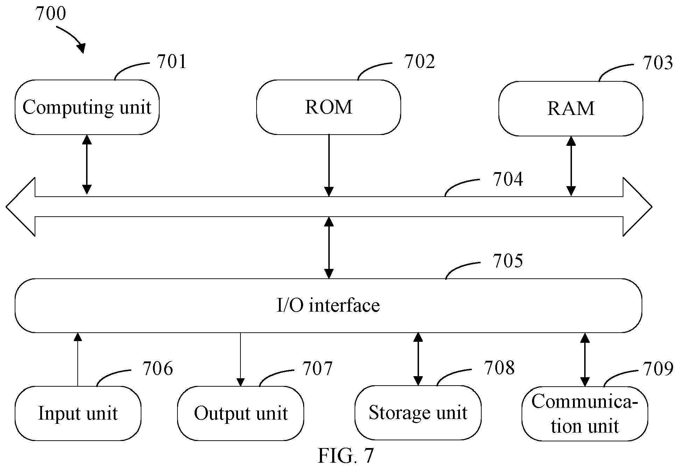

FIG. 7 shows a schematic block diagram of an exemplary electronic device 700 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processing, a cellular phone, a smart phone, a wearable device and other similar computing devices. The components shown herein, their connections and relationships, and their functions are merely examples, and are not intended to limit the implementation of the present disclosure described and/or required herein.

As shown in FIG. 7, the device 700 includes a computing unit 701 that may perform various appropriate actions and processes according to a computer program stored in a Read-Only Memory (ROM) 702 or a computer program loaded from a storage unit 708 into a Random Access Memory (RAM) 703. Various programs and data required for an operation of device 700 may also be stored in the RAM 703. The computing unit 701, the ROM 702 and the RAM 703 are connected to each other through a bus 704. The input/output (I/O) interface 705 is also connected to the bus 704.

A plurality of components in the device 700 are connected to the I/O interface 705, and include an input unit 706 such as a keyboard, a mouse, or the like; an output unit 707 such as various types of displays, speakers, or the like; the storage unit 708 such as a magnetic disk, an optical disk, or the like; and a communication unit 709 such as a network card, a modem, a wireless communication transceiver, or the like. The communication unit 709 allows the device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include, but are not limited to, a Central Processing Unit (CPU), a Graphics Processing Unit (GPU), various dedicated Artificial Intelligence (AI) computing chips, various computing units that run machine learning model algorithms, a Digital Signal Processor (DSP), and any appropriate processors, controllers, microcontrollers, or the like. The computing unit 701 performs various methods and processing described above, such as the above resource allocation method. For example, in some implementations, the above resource allocation method may be implemented as a computer software program tangibly contained in a computer-readable medium, such as the storage unit 708. In some implementations, a part or all of the computer program may be loaded and/or installed on the device 700 via the ROM 702 and/or the communication unit 709. When the computer program is loaded into RAM 703 and executed by the computing unit 701, one or more steps of the resource allocation method described above may be performed. Alternatively, in other implementations, the computing unit 701 may be configured to perform the above resource allocation method by any other suitable means (e.g., by means of firmware).

Various implements of the system and technologies described above herein may be implemented in a digital electronic circuit system, an integrated circuit system, a Field Programmable Gate Array (FPGA), an Application Specific Integrated Circuit (ASIC), Application Specific Standard Parts (ASSP), a System on Chip (SOC), a Complex Programmable Logic Device (CPLD), a computer hardware, firmware, software, and/or a combination thereof. These various implementations may be implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

The program code for implementing the method of the present disclosure may be written in any combination of one or more programming languages. The program code may be provided to a processor or controller of a general-purpose computer, a special-purpose computer or other programmable data processing devices, which enables the program code, when executed by the processor or controller, to cause the function/operation specified in the flowchart and/or block diagram to be implemented. The program code may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include electrical connections based on one or more lines, a portable computer disk, a hard disk, a Random Access Memory (RAM), a Read-Only Memory (ROM), an Erasable Programmable Read-Only Memory (EPROM or a flash memory), an optical fiber, a portable Compact Disc Read-Only Memory (CD-ROM), an optical storage device, a magnetic storage device, or any suitable combination thereof.

In order to provide interaction with a user, the system and technologies described herein may be implemented on a computer that has: a display apparatus (e.g., a cathode ray tube (CRT) or a Liquid Crystal Display (LCD) monitor) for displaying information to the user; and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system (which serves as, for example, a data server) including a back-end component, or in a computing system (which serves as, for example, an application server) including a middleware, or in a computing system including a front-end component (e.g., a user computer with a graphical user interface or web browser through which the user may interact with the implementation of the system and technologies described herein), or in a computing system including any combination of the back-end component, the middleware component, or the front-end component. The components of the system may be connected to each other through any form or kind of digital data communication (e.g., a communication network). Examples of the communication network include a Local Area Network (LAN), a Wide Area Network (WAN), and the Internet.

A computer system may include a client and a server. The client and server are generally far away from each other and usually interact with each other through a communication network. A relationship between the client and the server is generated by computer programs running on corresponding computers and having a client-server relationship with each other. The server may be a cloud server, a distributed system server, or a blockchain server.

It should be understood that, the steps may be reordered, added or removed by using the various forms of the flows described above. For example, the steps recorded in the present disclosure can be performed in parallel, in sequence, or in different orders, as long as a desired result of the technical scheme disclosed in the present disclosure can be realized, which is not limited herein.

The foregoing specific implementations do not constitute a limitation on the protection scope of the present disclosure. Those having ordinary skill in the art should understand that, various modifications, combinations, sub-combinations and substitutions may be made according to a design requirement and other factors. Any modification, equivalent replacement, improvement or the like made within the principle of the present disclosure shall be included in the protection scope of the present disclosure.

## Claims

1. A resource allocation method, **characterized by** comprising:
creating (S101) a pod for a target task;
acquiring (S102) Graphics Processing Unit, GPU, resource requirement information of the target task;
acquiring (S103) available node information of a target cluster and available GPU resource information of the target cluster; and
allocating (S104), based on the available node information and the available GPU resource information, first and second target nodes satisfying the GPU resource requirement information to the pod, wherein the first target node is a node where a target GPU resource allocated to the pod is located, and the second target node is a node where the pod allocated to the pod is located.

2. The method of claim 1, wherein the GPU resource requirement information comprises GPU resource usage, a type of a GPU card, and a topology structure of the GPU card, and
allocating, based on the available node information and the available GPU resource information, the first and second target nodes satisfying the GPU resource requirement information to the pod, comprises:
determining, based on the available node information and the available GPU resource information, a plurality of candidate nodes satisfying the GPU resource usage for the pod;
determining, from the plurality of candidate nodes, a first node set satisfying the type of the GPU card and the topology structure of the GPU card; and
determining, based on the first node set, the first target node and the second target node;
preferably, determining, based on the first node set, the first target node and the second target node, comprises:
determining an idle quantity of GPU resource corresponding to each GPU of each node in the first node set;
selecting, from the first node set, a node where the idle quantity of GPU resource satisfies the GPU resource usage as a second node set; and
determining, based on the second node set, the first target node and the second target node.

3. The method of claim 2, wherein determining, based on the second node set, the first target node and the second target node, comprises:
acquiring information of a switch corresponding to each node in the second node set;
determining, based on the information of the switch corresponding to each node in the second node set, third and fourth node sets corresponding to each node in the second node set; and
determining, from the second node set, the third node set and the fourth node set, the first target node and the second target node.

4. The method of claim 3, wherein determining, based on the information of the switch corresponding to each node in the second node set, the third and fourth node sets corresponding to each node in the second node set, comprises:
determining, for any node in the second node set, a node corresponding to a same switch as the node as the third node set corresponding to the node; and
determining, for any node in the second node set, a node corresponding to a different switch from the node as the fourth node set corresponding to the node.

5. The method of claim 3, wherein determining, from the second node set, the third node set and the fourth node set, the first target node and the second target node, comprises:
acquiring load situations respectively corresponding to the second node set, the third node set and the fourth node set; and
determining, according to the load situations respectively corresponding to the second node set, the third node set and the fourth node set, the first target node and the second target node;
preferably, determining, according to the load situations respectively corresponding to the second node set, the third node set and the fourth node set, the first target node and the second target node, comprises:
determining an attribute of each node in the second node set, the third node set and the fourth node set and a weight value corresponding to the attribute;
determining, based on the attribute of each node and the weight value corresponding to the attribute, a total weight value of each node;
determining, according to the total weight value of each node, a maximum total weight value; and
determining, according to the maximum total weight value, the first target node and the second target node;
preferably, the attribute of each node comprises at least one of:
a set to which the node pertains;
network throughput of a switch corresponding to the node;
usage of the switch corresponding to the node;
an idle quantity of video memory of a GPU corresponding to the node;
an idle quantity of computing power of the GPU corresponding to the node;
an idle quantity of magnetic disk corresponding to the node;
an idle quantity of central processing unit, CPU, corresponding to the node; or
a GPU priority corresponding to the node.

6. The method of any one of claims 1 to 5, further comprising:
sending a service address of the target GPU resource in the first target node to the second target node, to enable the second target node to invoke the target GPU resource based on the service address to execute the target task.

7. A resource allocation apparatus, **characterized by** comprising:
a creation module (401) configured to create a pod for a target task;
a first acquisition module (402) configured to acquire Graphics Processing Unit, GPU, resource requirement information of the target task;
a second acquisition module (403) configured to acquire available node information of a target cluster and available GPU resource information of the target cluster; and
an allocation module (404) configured to allocate, based on the available node information and the available GPU resource information, first and second target nodes satisfying the GPU resource requirement information to the pod, wherein the first target node is a node where a target GPU resource allocated to the pod is located, and the second target node is a node where the pod allocated to the pod is located.

8. The apparatus of claim 7, wherein the GPU resource requirement information comprises GPU resource usage, a type of a GPU card, and a topology structure of the GPU card, and
the allocation module comprises:
a first determination sub-module configured to determine, based on the available node information and the available GPU resource information, a plurality of candidate nodes satisfying the GPU resource usage for the pod;
a second determination sub-module configured to determine, from the plurality of candidate nodes, a first node set satisfying the type of the GPU card and the topology structure of the GPU card; and
a third determination sub-module configured to determine, based on the first node set, the first target node and the second target node;
preferably, the third determination sub-module is configured to:
determine an idle quantity of GPU resource corresponding to each GPU of each node in the first node set;
select, from the first node set, a node where the idle quantity of GPU resource satisfies the GPU resource usage as a second node set; and
determine, based on the second node set, the first target node and the second target node.

9. The apparatus of claim 8, wherein the third determination sub-module is configured to:
acquire information of a switch corresponding to each node in the second node set;
determine, based on the information of the switch corresponding to each node in the second node set, third and fourth node sets corresponding to each node in the second node set; and
determine, from the second node set, the third node set and the fourth node set, the first target node and the second target node.

10. The apparatus of claim 9, wherein the third determination sub-module is configured to:
determine, for any node in the second node set, a node corresponding to a same switch as the node as the third node set corresponding to the node; and
determine, for any node in the second node set, a node corresponding to a different switch from the node as the fourth node set corresponding to the node.

11. The apparatus of claim 9, wherein the third determination sub-module is configured to:
acquire load situations respectively corresponding to the second node set, the third node set and the fourth node set; and
determine, according to the load situations respectively corresponding to the second node set, the third node set and the fourth node set, the first target node and the second target node;
preferably, the third determination sub-module is configured to:
determine an attribute of each node in the second node set, the third node set and the fourth node set and a weight value corresponding to the attribute;
determine, based on the attribute of each node and the weight value corresponding to the attribute, a total weight value of each node;
determine, according to the total weight value of each node, a maximum total weight value; and
determine, according to the maximum total weight value, the first target node and the second target node;
preferably, the attribute of each node comprises at least one of:
a set to which the node pertains;
network throughput of a switch corresponding to the node;
usage of the switch corresponding to the node;
an idle quantity of video memory of a GPU corresponding to the node;
an idle quantity of computing power of the GPU corresponding to the node;
an idle quantity of magnetic disk corresponding to the node;
an idle quantity of central processing unit, CPU, corresponding to the node; or
a GPU priority corresponding to the node.

12. The apparatus of any one of claims 7 to 11, further comprising:
a notification module (405) configured to send a service address of the target GPU resource in the first target node to the second target node, to enable the second target node to invoke the target GPU resource based on the service address to execute the target task.

13. An electronic device (700), comprising:
at least one processor; and
a memory connected in communication with the at least one processor;
wherein the memory stores an instruction executable by the at least one processor, and the instruction, when executed by the at least one processor, enables the at least one processor to execute the method of any one of claims 1 to 6.

14. A non-transitory computer-readable storage medium storing a computer instruction thereon, wherein the computer instruction is used to cause a computer to execute the method of any one of claims 1 to 6.

15. A computer program product comprising a computer program, wherein the computer program implements the method of any one of claims 1 to 6, when executed by a processor.
